# EUROPÄISCHE PATENTSCHRIFT

(11) **EP 3 441 267 B1**
(45) Veröffentlichungstag und Bekanntmachung des Hinweises auf die Patenterteilung: **17.06.2020**
(21) Anmeldenummer: 17465536.5
(22) Anmeldetag: 11.08.2017
(51) Int. Cl.: B60R 25/40, E05B 81/82

(54) **ZUGANGSANORDNUNG FÜR EIN FAHRZEUG**
ACCESS ARRANGEMENT FOR A VEHICLE
SYSTÈME D'ACCÈS POUR UN VÉHICULE

(43) Veröffentlichungstag der Anmeldung: 13.02.2019
(73) Patentinhaber: Continental Automotive GmbH, 30165 Hannover (DE)
(72) Erfinder: Craciun, Serban, 325400 Caransebes (RO)

(56) Entgegenhaltungen:
- EP-A1- 0 584 499
- WO-A2-2010/125306
- DE-A1-102005 054 111
- DE-A1-102013 007 154
- DE-U1-202013 103 042
- DE-U1-202016 105 621
- US-A1- 2005 062 453

## Beschreibung

Die vorliegende Erfindung betrifft eine Zugangsanordnung für ein Fahrzeug, insbesondere um eine Notentriegelung des Fahrzeugs bei Ausfall des Fahrzeugbordnetzes durchführen zu können. Ferner betrifft die Erfindung ein Fahrzeug mit einer gerade erwähnten Zugangsanordnung.

Um einen unbefugten Zutritt zu einem Fahrzeug, insbesondere Kraftfahrzeug zu verhindern, verwenden moderne Zugangsberechtigungssysteme oder Zugangsanordnungen in Fahrzeugen elektronische Sicherungssysteme, bei denen zur Authentifizierung eines Benutzers eine Datenkommunikation zwischen einer ersten Kommunikationseinrichtung auf Fahrzeugseite mit einer zweiten Fahrzeugkommunikationseinrichtung in einem mobilen Identifikationsgeber des Benutzers, wie einem Schlüssel oder Schlüsselanhänger, erfolgt. Dabei werden bei einer aktiven Zugangsanordnung von dem mobilen Identifikationsgeber Steuersignale sowie ein Identifikationssignal, beispielsweise durch Drücken einer entsprechenden Taste durch den Benutzer des mobilen Identifikationsgebers, an das Fahrzeug gesendet, woraufhin dieses bei korrektem Identifikationscode entriegelt bzw. verriegelt wird.

Bei einer sogenannten passiven Zugangsanordnung werden zunächst von einer ersten Kommunikationseinrichtung des Fahrzeugs in regelmäßigen Zeitabständen Anfragesignale mit einer bestimmten Feldstärke ausgesendet, um zu überprüfen, ob sich ein mobiler Identifikationsgeber in einem Annäherungsbereich bzw. in einem Zugangsbereich (Entriegelungszone) um das Fahrzeug befindet. Nähert sich ein mobiler Identifikationsgeber dem Fahrzeug und kann schließlich dessen Anfragesignale empfangen, so wird er auf den Empfang eines Anfragesignals antworten, um einen Authentifizierungsvorgang einzuleiten.

Dabei werden Datentelegramme ausgetauscht, in denen der zweite mobile Identifikationsgeber seinen Authentifizierungscode dem Fahrzeug übermittelt. Bei erfolgreicher Überprüfung des Authentifizierungscodes ist es dann möglich, dass ein Benutzer, der sich direkt am Fahrzeug in dem Zugangsbereich befindet, durch Betätigen eines Türgriffs ein Entriegeln der entsprechenden Fahrzeugtür oder aller Fahrzeugtüren initiiert. Da hier kein aktives Betätigen eines mechanischen oder elektrischen Identifikationsgebers bzw. Schlüssels durch einen Benutzer vorgenommen werden muss, wird diese Art der Zugangsberechtigungsprüfung auch als passive Zugangsberechtigungsprüfung und die entsprechenden Zugangsberechtigungssysteme als passive elektronische Zugangsberechtigungssysteme oder passive Zugangsanordnungen bezeichnet.

Wie gerade erwähnt, ist es insbesondere für passive Zugangsanordnungen nötig, dass eine fahrzeugseitige Kommunikationseinrichtung Signale zum mobilen Identifikationsgeber des Benutzers aussendet. Dies ist jedoch in dem Fall nicht mehr möglich, bei dem das Bordnetz des Fahrzeugs (gespeist durch eine Fahrzeugbatterie), das in der Regel die fahrzeugseitige Kommunikationseinrichtung mit Energie versorgt, ausfällt. Eine Möglichkeit des Ausfalls kann daher rühren, dass die das Bordnetz versorgende Fahrzeugbatterie leer ist bzw. keine ausreichende Spannung mehr bereitstellt. Zu diesem Zweck ist es denkbar, einen mobilen Identifikationsgeber mit einem mechanischen Notschlüssel zu versehen, der das Öffnen des Fahrzeugs über eine mechanische Schließvorrichtung am Fahrzeug ermöglicht. Damit die Schließvorrichtung manuell geöffnet werden kann, kann ein derartiger Notschlüssel neben dem Schlüsselbart einen ausreichend großen Schlüsselkopf aufweisen, damit das zum Öffnen des Schließmechanismus erforderliche Drehmoment aufgebracht werden kann. Ein derartig bemessener Schlüsselkopf beansprucht jedoch einen beträchtlichen Bauraum am Identifikationsgeber, sodass auf nachteilige Weise die Abmessungen des Identifikationsgebers durch diesen Notschlüssel bzw. Schlüsselkopf maßgeblich bestimmt und vergrößert werden. Ein derartiges Volumen eines Identifikationsgebers ist jedoch meist unerwünscht, da derartige Identifikationsgeber in vielen Fällen auch in Kleidertaschen eines Benutzers verwahrt werden und somit zum Ausbeulen der Taschen führen.

Die Druckschrift DE 20 2013 103 042 U1 offenbart ein Kraftfahrzeugschloss mit einer Schlossfalle für den haltenden Eingriff mit einem Schließkeil und einer der Schlossfalle zugeordneten Sperrklinke, wobei ein Öffnungshilfsantrieb mit einem elektrischen Antriebsmotor für das motorische Ausheben der Sperrklinke vorgesehen ist. Dabei ist dem Kraftfahrzeugschloss eine Notspannungsversorgung für die Spannungsversorgung des Kraftfahrzeugschlosses im Notbetrieb, insbesondere bei Ausfall einer Zentralbatterie des Kraftfahrzeugs, zugeordnet, wobei die Notspannungsversorgung einen Doppelschichtkondensator und eine Notbatterie zum Laden des Doppelschichtkondensators aufweist und wobei im Notbetrieb zumindest eine erste Leistungsabgabe an das Kraftfahrzeugschloss über den Doppelschichtkondensator erfolgt.

Somit besteht die Aufgabe der vorliegenden Erfindung darin, eine Möglichkeit zu schaffen, einen Zugang zum Fahrzeug bei Versagen der fahrzeugseitigen Stromversorgung auch ohne Notschlüssel zu schaffen.

Diese Aufgabe wird durch die Gegenstände der unabhängigen Ansprüche gelöst. Vorteilhafte Ausgestaltungen sind Gegenstand der Unteransprüche.

Gemäß einem ersten Aspekt der Erfindung umfasst eine Zugangsanordnung für ein Fahrzeug, insbesondere ein Kraftfahrzeug, eine fahrzeugseitige Entriegelungseinrichtung zum Betätigen, insbesondere Entriegeln, eines Sperrmechanismus der Zugangsanordnung. Ferner umfasst sie eine fahrzeugseitige aufladbare elektrische Energiespeichereinrichtung, die dafür eingerichtet ist, die Entriegelungseinrichtung mit Energie zu versorgen. Überdies umfasst sie eine fahrzeugseitige aufgeladene elektrische Energiespeichereinrichtung, die dafür eingerichtet ist, die fahrzeugseitige aufladbare elektrische Energiespeichereinrichtung aufzuladen. Dabei ist es möglich, dass die fahrzeugseitige aufladbare elektrische Energiespeichereinrichtung nicht mit der bordeigenen Stromversorgung des Fahrzeugs verbunden ist, sondern von dieser unabhängig. Auch ist es möglich, dass die fahrzeugseitige aufgeladene elektrische Energiespeichereinrichtung nicht mit der bordeigenen Stromversorgung des Fahrzeugs verbunden ist. Die Zugangsanordnung umfasst des Weiteren eine Ladesteuereinrichtung zum Steuern des Ladevorgangs der fahrzeugseitigen aufladbaren elektrischen Energiespeichereinrichtung durch die fahrzeugseitige aufgeladene elektrische Energiespeichereinrichtung. Schließlich hat die Zugangsanordnung eine fahrzeugseitige Authentifizierungseinrichtung zum Prüfen und insbesondere auch Vollziehen einer Zugangsberechtigung und zum Steuern der Ladesteuereinrichtung in Abhängigkeit der Prüfung der Zugangsberechtigung. Durch das Vorsehen der fahrzeugseitigen aufgeladenen elektrischen Energiespeichereinrichtung und der Möglichkeit des gezielten Aufladens der fahrzeugseitigen aufladbaren elektrischen Energiespeichereinrichtung in einem "Notlauf-Zustand", bei dem das fahrzeugseitige Bordnetz bzw. die Fahrzeugbatterie gar keine oder nicht mehr ausreichende Energie zur Verfügung stellt, kann auch in diesem "Notlauf-Zustand" ohne gesonderten Notschlüssel eine Betätigung der fahrzeugseitigen Entriegelungseinrichtung erfolgen.

Gemäß einer Ausgestaltung kann es sich bei der fahrzeugseitigen aufgeladenen elektrischen Energiespeichereinrichtung um eine galvanische Zelle, insbesondere in der Form einer Primärzelle handeln, d. h. um eine nicht-aufladbare Primärzelle bzw. Batterie.

Gemäß einer weiteren Ausgestaltung kann die fahrzeugseitige aufladbare elektrische Energiespeichereinrichtung einen Akku aufweisen, d. h. eine aufladbare galvanische Zelle bzw. Sekundärzelle. Es ist jedoch auch denkbar, dass sie einen Kondensator, vorzugsweise in der Form eines Superkondensators oder Ultrakondensators aufweist, der insbesondere eine große Leistungsdichte aufweist und schnell geladen und entladen werden kann.

Gemäß einer weiteren Ausgestaltung umfasst die Ladesteuereinrichtung ein Gleichspannungswandler in der Form eines Aufwärtswandlers, um eine von der aufgeladenen fahrzeugseitigen elektrischen Energiespeichereinrichtung bereitgestellte erste Spannung in eine zu dieser höheren zweiten Spannung zum Aufladen der fahrzeugseitigen aufladbaren elektrischen Energiespeichereinrichtung umzuwandeln. Auf diese Weise ist es möglich, eine Batterie als aufgeladene Energiespeichereinrichtung zu verwenden, um über den Aufwärtswandler beispielsweise einen Superkondensator schnell zu laden, damit über diesen die Entriegelungseinrichtung betätigt werden kann.

Gemäß einer weiteren Ausgestaltung der Zugangsanordnung umfasst diese ferner eine fahrzeugseitige Energiezufuhreinrichtung mit folgenden Merkmalen. Diese hat einen ersten Abschnitt zum Aufnehmen von drahtlos übertragener Energie und zum Umwandeln der übertragenen Energie in elektrische Energie. Ferner hat sie einen zweiten Abschnitt zum Versorgen der fahrzeugseitigen Authentifizierungseinrichtung mit der elektrischen Energie. Auf diese Weise ist es möglich, dass auch die Authentifizierungseinrichtung, beispielsweise bei einem kompletten Ausfall des fahrzeugseitigen Bordnetzes bzw. Fahrzeugbatterie, mittels der fahrzeugseitigen Energiezufuhreinrichtung durch Übertragen von Energie von außen versorgt werden kann.

Gemäß einer weiteren Ausgestaltung der Zugangsanordnung hat diese ferner eine weitere (zweite) fahrzeugseitige aufladbare elektrische Energiespeichereinrichtung, die mit dem zweiten Abschnitt der fahrzeugseitigen Energiezufuhreinrichtung verbunden ist, um aufgeladen zu werden. In diesem Zusammenhang ist es auch denkbar, dass die weitere fahrzeugseitige aufladbare elektrische Energiespeichereinrichtung ferner dafür eingerichtet ist, die fahrzeugseitige Authentifizierungseinrichtung mit Energie zu versorgen. Durch einen derartigen Aufbau ist es dann denkbar, dass die fahrzeugseitige Authentifizierungseinrichtung entweder direkt von dem zweiten Abschnitt der fahrzeugseitigen Energiezufuhreinrichtung mit Energie versorgt wird oder über die weitere fahrzeugseitige aufladbare elektrische Energiespeichereinrichtung, die ihrerseits über den zweiten Abschnitt der fahrzeugseitigen Energiezufuhreinrichtung mit Energie versorgt bzw. aufgeladen wird.

Gemäß einer weiteren Ausgestaltung der fahrzeugseitigen Energiezufuhreinrichtung weist diese eine Funkschnittstelle auf. Dabei ist es denkbar, dass eine derartige Funkschnittstelle als Niederfrequenzfunkschnittstelle ausgebildet ist, die bei Frequenzen von ca. 125 kHz arbeitet. Es ist insbesondere jedoch auch denkbar, dass eine derartige Funkschnittstelle in der Form einer Nahbereichsfunkschnittstelle oder NFC-(Near Field Communication) Schnittstelle ausgebildet ist, um eine mittels Funk drahtlos übertragene Energie aufzunehmen. Wie später noch näher erläutert werden wird, kann eine derartige Energie von einem der Zugangsanordnung zugeordneten Identifikationsgeber bereitgestellt werden.

Gemäß einer weiteren Ausgestaltung kann die fahrzeugseitige Energiezufuhreinrichtung auch eine Lichtschnittstelle umfassen. Dabei ist es insbesondere denkbar, dass diese Lichtschnittstelle in der Form einer Fotozelle (Solarzelle) ausgebildet ist, um eine mittels Licht drahtlos übertragene Energie insbesondere von einem der Zugangsanordnung zugeordneten Identifikationsgeber aufzunehmen. Dabei kann das Licht von einem Leuchtmittel des Identifikationsgebers, wie einer LED (Light Emitting Diode) stammen. Insbesondere bei Ausbilden des mobilen Identifikationsgebers als ein Mobiltelefon bzw. Smartphone, kann eine aktivierte Taschenlampenfunktion bzw. Blitzfunktion zur Bereitstellung des für die Energieversorgung verwendeten Lichts verwendet werden. Alternativ könnte die Energie auch von einer weiteren Lichtquelle stammen, beispielsweise von einer separaten Taschenlampe oder auch der Sonne. Im Fall der Verwendung von Sonnenlicht ist es auch denkbar, dass eine Authentifizierung und/oder Entriegelung stattfinden kann, wenn sowohl das Fahrzeug als auch der Identifikationsgeber keine ausreichende Batterieladung mehr haben. In diesem Fall muss der Benutzer dann warten, bis die Sonne scheint bzw. sie mittels einer fahrzeugseitigen Fotozelle/Solarzelle als erster Abschnitt der Energiezufuhreinrichtung die weitere fahrzeugseitige aufladbare Energiespeichereinrichtung aufgeladen hat bzw. der fahrzeugseitigen Authentifizierungseinrichtung genügend Energie zur Verfügung gestellt hat. Während der Energieübertragung könnte Licht auch zur Kommunikation für einen Authentifizierungsvorgang verwendet werden. Insbesondere ist hierbei auch Licht im Infrarot (IR)-Bereich möglich.

Gemäß einer weiteren Ausgestaltung der Zugangsanordnung gibt die fahrzeugseitige Authentifizierungseinrichtung zum Vollziehen der Zugangsberechtigung ein Entriegelungssignal an die fahrzeugseitige Entriegelungseinrichtung zum Entriegeln eines Sperrmechanismus aus. Dabei wird insbesondere vorausgesetzt, dass eine Prüfung der Authentifizierungseinrichtung ein positives Ergebnis ergeben hat. Beispielsweise bedeutet dies, dass ein der Zugangsanordnung zugeordneter mobiler Identifikationsgeber zur Authentifizierungsprüfung seinen Code zu der Authentifizierungseinrichtung gesendet hat, wobei dieser mit einem in der Authentifizierungseinrichtung gespeicherten Code vergleichen wird und eine Übereinstimmung des übermittelten und des gespeicherten Codes zu einem positiven Authentifizierungsergebnis, und dann insbesondere zu einer Entriegelung führt.

Gemäß einer weiteren Ausgestaltung der Zugangsanordnung umfasst diese einen mobilen Identifikationsgeber zum Ausgeben bzw. Bereitstellen der drahtlos zu übertragenden Energie an die fahrzeugseitige Energiezufuhreinrichtung. Dieser mobile Identifikationsgeber kann derart ausgestaltet sein, dass er mit einem Benutzer bzw. von diesem mitführbar ist und als ein Schlüssel, Schlüsselanhänger, als ein Mobiltelefon, insbesondere ein Smartphone (intelligentes Telefon) oder als ein Fitnesstracker (Fitnessüberwachungseinrichtung, insbesondere um das Handgelenk getragen) usw. ausgebildet ist. Auf diese Weise kann der Benutzer beispielsweise einen Gegenstand seines täglichen Lebens auch dazu verwenden, eine Not-Entriegelung des Fahrzeugs bei Versagen des fahrzeugeigenen Bordnetzes durchzuführen.

Es ist ferner denkbar, dass der mobile Identifikationsgeber, mit dem die Not-Entriegelung möglich ist, ferner dafür eingerichtet ist, mit der fahrzeugseitigen Authentifizierungseinrichtung zu kommunizieren, um eine Authentifizierung des mobilen Identifikationsgebers an der Zugangsanordnung bzw. an dem Fahrzeug durchzuführen. Wie oben bereits beschrieben, kann eine Authentifizierung dadurch stattfinden, dass ein oder mehrere Identifikationscodes zwischen dem mobilen Identifikationsgeber und der fahrzeugseitigen Authentifizierungseinrichtung ausgetauscht und mit vorbestimmten bzw. gespeicherten Codes verglichen werden.

Gemäß einem weiteren Aspekt der Erfindung wird ein Fahrzeug mit einer oben dargestellten Zugangsanordnung oder einer Ausgestaltung hiervon geschaffen. Dabei kann das Fahrzeug zumindest eine Fahrzeugtür haben, in der die Komponenten der Zugangsanordnung angeordnet sind. Es ist ferner denkbar, dass die Fahrzeugtür einen Türgriff aufweist, in der die fahrzeugseitige Energiezufuhreinrichtung oder zumindest der erste Abschnitt der fahrzeugseitigen Energiezufuhreinrichtung vorgesehen sind.

Details und vorteilhafte Ausgestaltungen der oben dargestellten Zugangsanordnung sind, soweit im Übrigen auf das Fahrzeug übertragbar, auch als vorteilhafte Ausgestaltungen des Fahrzeugs anzusehen und umgekehrt.

Im Folgenden sollen nun beispielhafte Ausführungsformen der vorliegenden Erfindung bezugnehmend auf die beiliegende Zeichnung näher erläutert werden. Es zeigen:

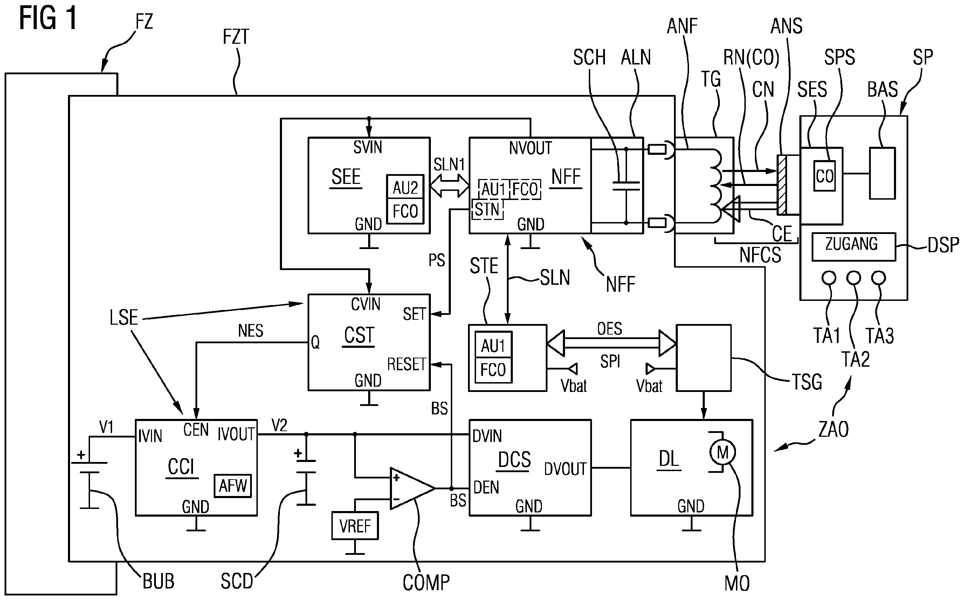

- Fig. 1: eine schematische Darstellung der wesentlichen Komponenten einer Zugangsanordnung gemäß einer Ausführungsform der Erfindung.

Es sei nun auf Fig. 1 verwiesen, in der eine Zugangsanordnung ZAO gezeigt ist, welche für die Anwendung in einem Fahrzeug FZ, insbesondere einem Kraftfahrzeug, ausgelegt ist. Die Zugangsanordnung ZAO umfasst dabei einen fahrzeugseitigen Teil, der in dem Fahrzeug FZ, insbesondere in einer Tür FZT des Fahrzeugs untergebracht ist. Wie es auf der rechten Seite der Figur zu sehen ist, hat die Zugangsanordnung ZAO ferner einen mobilen Teil, der von einem mobilen Identifikationsgeber, hier in der Ausführung eines Smartphones (intelligentes Telefon) SP gebildet wird.

In einem normalen bzw. ordnungsgemäßen Betrieb der Zugangsanordnung, bei dem eine fahrzeugseitige Batterie (nicht dargestellt) ein Bordnetz des Fahrzeugs mit Strom versorgt, sodass die wesentlichen Komponenten mit der Batteriespannung Vbat versorgt sind, wird eine fahrzeugseitige Steuereinrichtung STE (beispielsweise in der Form eines Microcontrollers) über eine Steuerleitung SLN ein Signal an eine fahrzeugseitige Sende-/Empfangseinrichtung NFF schicken, die dann in regelmäßigen Zeitabständen Anfragesignale CN aussendet. Es ist jedoch auch denkbar, dass anstelle einer Steuereinrichtung STE (außerhalb der fahrzeugseitigen Sende-/Empfangseinrichtung) ein in die fahrzeugseitige Sende-/Empfangseinrichtung integrierte Steuereinrichtung STN die Aufgabe der Steuereinrichtung STE übernimmt. Im vorliegenden Fall handelt es sich bei der fahrzeugseitigen Sende-/Empfangseinrichtung um ein NFC-Modul bzw. ein NFC-Lesegerät NFF, das benachbart zu oder zumindest teilweise in einen Türgriff TG der Fahrzeugtür FZT eingebaut ist. Dieses NFC-Lesegerät NFF wird nun Funksignale, insbesondere mit einer kurzen Reichweite von ca. 10 cm, als Anfragesignale CN aussenden. Diese Funksignale zur Anfrage sowie als Antwort liegen dabei in einem Frequenzbereich gemäß einem NFC-Standard, insbesondere bei 13,56 MHz.

Befindet sich nun ein funktechnisches Gegenstück, wie das Smartphone SP in Reichweite der Anfragesignale CN, so wird es auf diese Anfragesignale CN mit einem oder mehreren Antwortsignalen RN antworten. Zum Austausch dieser Anfrage- und Antwortsignale bestehen auf Fahrzeugseite die fahrzeugseitige (NFC-)Antenne ANF (als Teil der fahrzeugseitigen Sende-/Empfangseinrichtung) und befindet sich auf Seiten des Smartphones SP die smartphoneseitige (NFC-)Antenne ANS, die zusammen eine NFC-Schnittstelle NFCS bilden.

Die Anfragesignale CN werden von der smartphoneseitigen Antenne ANS empfangen und zu einer smartphoneseitigen Sende-/Empfangseinrichtung SES geleitet. Diese umfasst eine Speichereinrichtung SPS, in der ein Identifizierungscode CO abgelegt ist. Dieser Code wird von der Sende-/Empfangseinrichtung SES in ein Antwortsignal RN verpackt, sodass der Identifizierungscode CO zurück zum Fahrzeug, genauer zur Antenne ANF übertragen wird. Von dort wird der Code wieder über die Steuerleitung SLN zur fahrzeugseitigen Steuereinrichtung STE geleitet, wobei er dort von einem Authentifizierungsabschnitt AU1 geprüft wird. Bei dieser Prüfung wird der Authentifizierungscode CO mit einem in dem Authentifizierungsabschnitt AU1 gespeicherten Code FCO verglichen, wobei bei Übereinstimmung des Codes ein positives Ergebnis erhalten wird.

Bei Erhalt eines positiven Ergebnisses der Prüfung des Identifizierungscodes CO gibt die Steuereinrichtung STE über einen Fahrzeugbus SPI ein entsprechendes Entriegelungssignal OES für eine ordnungsgemäße Entriegelung an einem Türsteuergerät TSG aus. Bei dem Fahrzeugbus kann es sich hierbei beispielsweise um einen sogenannten "serial peripheral interface" (SPI = serielle Peripherie Schnittstelle)-Bus handeln.

Das Türsteuergerät TSG wird, wie es angedeutet ist, von einer fahrzeugseitigen Batterie über das Bordnetz bzw. eine fahrzeugseitige Stromversorgung mit der Batteriespannung Vbat versorgt. Empfängt das Türsteuergerät TSG das ordnungsgemäße Entriegelungssignal OES, so wird es einen Motor MO eines Türschlosses DL der Fahrzeugtür FZT ansteuern, um die Fahrzeugtür FZT bzw. einen entsprechenden Sperrmechanismus zu entriegeln. Es ist auch denkbar, dass neben dem Türsteuergerät TSG der Fahrzeugtür FZT weitere Türsteuergeräte veranlasst werden, die entsprechenden Türschlösser bei eventueller weiterer Fahrzeugtüren zu entriegeln und somit einen Benutzerzugang zum Fahrzeug bzw. zur Fahrgastzelle des Fahrzeugs zu ermöglichen.

Neben diesem normalen oder ordnungsgemäßen Betrieb, der stattfindet, wenn die Fahrzeugbatterie und somit das Bordnetz des Fahrzeugs ausreichend Energie zur Verfügung stellt, ist auch ein Notlauf-Betrieb gemäß einer Ausführungsform der vorliegenden Erfindung insbesondere zum Durchführen einer Entriegelung denkbar.

Zu diesem Zweck der Einleitung eines Notlauf-Betriebs sei nun wieder auf das Smartphone SP als mobiler Identifikationsgeber eines Benutzers verwiesen. Dieses Smartphone SP ist in der Lage, mehrere Software-basierte Anwendungen ("Applications" oder "Apps") auszuführen. Beispielsweise ist es denkbar, dass eine entsprechende Anwendung mittels einer der drei Tasten TA1, TA2 oder TA3 gestartet werden kann. Die Tasten können dabei als mechanische Tasten, oder als sogenannte "Softkeys" (berührungsempfindliche Abschnitte einer Anzeigeeinrichtung) ausgeführt sein. Zur Kontrolle und zur Übersicht für einen Benutzer weist das Smartphone SP ferner eine Anzeige DSP auf, in der Informationen zur gerade ausgeführten Anwendung zu sehen sind. Beispielsweise ist es denkbar, dass durch Betätigen der Taste TA1 eine Anwendung mit dem Namen "Zugang") gestartet und ausgeführt wird, wobei die Ausführung der Anwendung "Zugang" gerade in der Anzeige DSP bestätigt wird. Dies ist nicht nur für den Notlauf denkbar, sondern auch für den ordnungsgemäßen Betrieb, der oben beschrieben worden ist.

Während es möglich ist, dass bei dem ordnungsgemäßen Betrieb nach Starten der Anwendung "Zugang" das Smartphone SP an den Türgriff TG zum Austausch von Funksignalen gehalten werden muss, ist es denkbar, dass im Notlaufbetrieb ein Benutzer beispielsweise die Taste TA2 betätigt, um den Notlaufbetrieb zu aktivieren. Es ist jedoch auch denkbar, dass die smartphoneseitige Sende-/Empfangseinrichtung SES den Notlaufbetrieb eigenständig aktiviert, wenn sie beispielsweise innerhalb eines bestimmten Zeitintervalls nach Starten der Anwendung "Zugang" kein Anfragesignal CN seitens der fahrzeugseitigen Antenne ANF erhalten hat.

Es wird nun davon ausgegangen, dass auf eine der oben beschriebenen Wege die Notlauffunktion im Smartphone SP aktiviert wurde. Außerdem wird angenommen, wie es in Fig. 1 gezeigt ist, dass das Smartphone SP in der Nähe des Türgriffs TG vom Benutzer gebracht wird. In diesem Fall wird nun die smartphoneseitige Sende-/Empfangseinrichtung SES gespeist durch eine smartphoneseitige Batterie BAS elektromagnetische Energie in der Form der Funksignale CE in Richtung der fahrzeugseitigen Antenne ANF senden. Diese Antenne dient somit als ein erster Abschnitt einer fahrzeugseitigen Energiezufuhreinrichtung zum Aufnehmen von drahtlos übertragener Energie und zum Umwandeln der übertragenen Energie in elektrische Energie. Das NFC-Lesegerät NFF, das als die fahrzeugseitige Energiezufuhreinrichtung betrachtet werden kann, wird im Notlauf nun nicht als Lesegerät betrieben, sondern in einem Transpondermodus, in dem es (von außen) zugeführte Energie aufnimmt.

Das NFC-Lesegerät NFF hat ferner einen zweiten Abschnitt ALN, der dazu dient, eine fahrzeugseitige aufladbare elektrische Energiespeichereinrichtung SCH in der Form eines Superkondensators oder Ultrakondensators aufzuladen. Dieser Superkondensator SCH hat im Beispiel eine Spannung von 5 Volt und eine Kapazität von 3,3 F.

Während die smartphoneseitige Sende-/Empfangseinrichtung SES in regelmäßigen (insbesondere kurzen) Zeitabständen (z.B. in Intervallen von 300-400ms oder für eine bestimmte Zeit auch permanent) energiereiche Funkwellen CE (z.B. mit einer Leistung von 100mWatt) in Richtung der Antenne ANF sendet, wird diese Energie weiter umgewandelt und dadurch der Superkondensator SCH aufgeladen. Ist ein bestimmter Ladezustand erreicht, so kann die in dem Kondensator SCH gespeicherte Energie dafür genutzt werden, speziell für den Notlauf vorgesehene Komponenten der Zugangsanordnung mit Energie zu versorgen. Dabei erfolgt über einen Spannungsausgang NVOUT des NFC-Lesegeräts NFF eine Spannungsversorgung eines Notlaufsteuergeräts SEE über dessen Spannungseingang SVIN, sowie eine Spannungsversorgung einer Ladeauslöseschaltung CST über dessen Spannungseingang CVIN.

Da nun über den Superkondensator SCH der Betrieb der fahrzeugseitigen Notsteuereinrichtung SEE sichergestellt ist, kann diese damit beginnen, einen Authentifizierungsvorgang bezüglich des Smartphones SP einzuleiten. Hierzu kann wie oben bezüglich des ordnungsgemäßen Betriebs über die Steuereinrichtung STE auch über die Notsteuereinrichtung SEE über eine Steuerleitung SLN1 ein entsprechendes Signal an das NFC-Lesegerät NFF ausgegeben werden, das daraufhin mit einem Austausch von Anfragesignalen CN und Antwortsignalen RN und einem entsprechenden Austausch des Identifizierungscodes CO beginnt. Der vom Smartphone übertragene Identifizierungscode CO kann dann von einem Authentifizierungsabschnitt AU2 der Notsteuereinrichtung SEE (entsprechend dem Authentifizierungsabschnitt AU1 der Steuereinrichtung STE) geprüft werden. Auf diese Weise ist es nun denkbar, dass trotz Versagens der bordeigenen Versorgungsspannung des Fahrzeugs durch Aufladen eines entsprechenden fahrzeugseitigen aufladbaren elektrischen Energiespeichers SCH eine Authentifizierungseinrichtung in der Form der fahrzeugseitigen Notsteuereinrichtung SEE mit dem entsprechenden Authentifizierungsabschnitt AU2 betrieben werden kann.

Stellt der Authentifizierungsabschnitt AU2 fest, dass am Türgriff TG angelegtes Smartphone SP zur Zugangsanordnung ZAO gehört, da ein Vergleich des mit einem Antwortsignal RN mitgeschickten Identifizierungscode CO mit einem in der Notsteuereinrichtung SEE gespeicherten Code FCO positiv war, so wird sie dieses positive Ergebnis der Überprüfung dem NFC-Lesegerät NFF mitteilen, das daraufhin ein Freigabesignal PS an einen Eingang SET der Ladeauslöseschaltung CST anlegt. Durch diese Freigabe wird die Ladeauslöseschaltung CST ein Startsignal NES an die einen Eingang CEN der Ladeschaltung CCI anlegen.

An dieser Ladeschaltung CCI liegt an einem weiteren Eingang IVIN eine Spannung V1 an, die von einer fahrzeugseitigen aufgeladenen Energiespeichereinrichtung in der Form einer Batterie BUB (back-up battery = Sicherungsbatterie) bereitgestellt wird. Als eine derartige Batterie BUB kann beispielsweise eine Knopfzelle dienen, die als Spannung V1 beispielsweise 3 Volt bereitstellt. Die Ladeschaltung CC1 hat ferner einen Aufwärtswandler AFW, um die Spannung V1 in eine Spannung V2 von 5 Volt hochzusetzen. Mit Eintreffen des Startsignals NES am Eingang CEN beginnt die Ladeschaltung CCI mit ihrem Betrieb, d. h. mit dem Hochsetzen der Spannung V1 zur Spannung V2 und dem Bereitstellen dieser Spannung V2 an dem Ausgang IVOUT. Diese bereitgestellte Spannung V2 wird dann dazu verwendet, eine weitere fahrzeugseitige aufladbare elektrische Energiespeichereinrichtung ebenso in der Form eines Kondensators bzw. Superkondensators SCD aufzuladen.

Die Ladeauslöseschaltung CST und die Ladeschaltung CCI können zusammen auch als eine Ladesteuereinrichtung LSE bezeichnet werden.

Eine Überwachungsschaltung in der Form eines Komperators COMP überwacht dabei das Aufladen des Superkondensators SCD. Dabei wird bei Erreichen einer bestimmten Schwellenspannung VREF durch den Komparator COMP einerseits diese Beendigung des Ladevorgangs an die Ladeauslöseschaltung CST mitgeteilt, indem ein entsprechendes Beendigungssignal BS an einem Eingang REST der Ladeauslöseschaltung CST angelegt wird. Dieses Beendigungssignal BS bewirkt, dass die Ladeauslöseschaltung das Anliegen des Startsignals NES am Eingang CEN der Ladeschaltung CCI beendet, sodass ein weiteres Aufladen des Superkondensators SCD unterbleibt.

Andererseits bewirkt das Beendigungssignal BS an einem Eingang DEN eines Schalters DCS, dass dieser eine Verbindung zwischen seinem Spannungseingang DVIN, der mit dem Superkondensator SCD verbunden ist, und seinem Spannungsausgang DVOUT herstellt. Durch dieses durchgängig Einschalten des Schalters DCS wird nun das Türschloss DL bzw. ein entsprechender Aktor oder Motor MO betrieben, um ein Entriegeln des Türschlosses bzw. eines entsprechenden Sperrmechanismus durchzuführen, und um so auch im Notfall ein Entriegeln der Fahrzeugtür FZT zu erreichen, und einen Benutzer dem Zugang zu dem Fahrzeuginneren zu ermöglichen.

Es sei nochmal abschließend bemerkt, dass gemäß einer Zugangsanordnung ZAO kein mechanischer Notschlüssel mehr in einem mobilen Identifikationsgeber (Smartphone) nötig ist. Zum anderen ist es denkbar, eine Notentriegelung auch bei völligem Versagen der bordeigenen Stromversorgung des Fahrzeugs zu ermöglichen. Durch das drahtlose Versorgen mit Energie des NFC-Lesegeräts und der Notsteuereinrichtung SEE direkt oder über den Superkondensator SCH auf der einen Seite und durch Betreiben der fahrzeugseitigen Entriegelungseinrichtung DL zum Betätigen des Sperrmechanismus MO versorgt durch die vom Bordnetz des Fahrzeugs unabhängigen Batterie BUB ist ein sicherer Betrieb der fahrzeugseitigen Entriegelungseinrichtung möglich.

Aufgrund der Tatsache, dass mit der Batterie BUB eine bereits aufgeladener Energiespeichereinrichtung verwendet wird, wird in einem Notlaufbetrieb lediglich die Notsteuereinrichtung SEE durch die NFC-Schnittstelle NFCS aufzuladen sein, wobei nach positiver Authentifizierung unmittelbar die Energie der Batterie BUB zum Aufladen des Superkondensators SCD für den Betrieb des Türschlosses bzw. der Entriegelungseinrichtung DL verwendet werden kann.

Schließlich ist bei der Zugangsanordnung gemäß der Ausführungsform der vorliegenden Erfindung zu nennen, dass für den Notlaufbetrieb (zum externen Versorgen der Notsteuereinrichtung SEE) ein von einem Benutzer im täglichen Leben verwendeter Gebrauchsgegenstand (wie ein Smartphone) verwendet werden kann, den der Benutzer in der Regel meist sowieso in betriebsbereitem Zustand mit sich führt.

## Patentansprüche

1. Zugangsanordnung (ZAO) für ein Fahrzeug (FZ) mit folgenden Merkmalen:
- einer fahrzeugseitigen Entriegelungseinrichtung (DCS, DL) zum Betätigen eines Sperrmechanismus (MO);
- einer fahrzeugseitigen aufladbaren elektrischen Energiespeichereinrichtung (SCD), die dafür eingerichtet ist, die Entriegelungseinrichtung (DCS, DL) mit Energie zu versorgen;
- einer fahrzeugseitigen aufgeladenen elektrischen Energiespeichereinrichtung (BUB), die dafür eingerichtet ist, die fahrzeugseitige aufladbare elektrische Energiespeichereinrichtung (SCD) aufzuladen;
- einer Ladesteuereinrichtung (CST, CCI) zum Steuern des Ladevorgangs der fahrzeugseitigen aufladbaren elektrischen Energiespeichereinrichtung (SCD) durch die fahrzeugseitige aufgeladene elektrische Energiespeichereinrichtung (BUB), **gekennzeichnet durch**
eine fahrzeugseitige Authentifizierungseinrichtung (SEE) zum Prüfen einer Zugangsberechtigung und zum Steuern der Ladesteuereinrichtung (CST, CCI) in Abhängigkeit der Prüfung der Zugangsberechtigung.

2. Zugangsanordnung nach Anspruch 1,
bei der die fahrzeugseitige aufgeladene elektrische Energiespeichereinrichtung (BUB) eine galvanische Zelle, insbesondere in der Form einer Primärzelle aufweist.

3. Zugangsanordnung nach Anspruch 1 oder 2,
bei der die fahrzeugseitige aufladbare elektrische Energiespeichereinrichtung einen Akku oder einen Kondensator, insbesondere in der Form eines Superkondensators (SCD), umfasst.

4. Zugangsanordnung nach einem der Ansprüche 1 bis 3,
bei der die Ladesteuereinrichtung (CST, CCI) einen Gleichspannungswandler in der Form eines Aufwärtswandlers (AFW) aufweist, um eine von der aufgeladenen fahrzeugseitigen elektrischen Energiespeichereinrichtung (BUB) bereitgestellte erste Spannung (V1) in eine zu dieser höheren zweiten Spannung (V2) zum Aufladen der fahrzeugseitigen aufladbaren elektrischen Energiespeichereinrichtung (SCD) umzuwandeln.

5. Zugangsanordnung nach einem der Ansprüche 1 bis 4,
die ferner eine fahrzeugseitige Energiezufuhreinrichtung (NFF) mit folgenden Merkmalen aufweist:
- einen ersten Abschnitt (ANF) zum Aufnehmen von drahtlos übertragener Energie (CE) und zum Umwandeln der übertragenen Energie in elektrische Energie, und
- einen zweiten Abschnitt (ALN) zum Versorgen der fahrzeugseitigen Authentifizierungseinrichtung (SEE) mit der elektrischen Energie.

6. Zugangsanordnung nach Anspruch 5,
die ferner eine weitere fahrzeugseitige aufladbare elektrische Energiespeichereinrichtung (SCH) aufweist, die mit dem zweiten Abschnitt (ALN) der fahrzeugseitigen Energiezufuhreinrichtung (NFF) verbunden ist, um aufgeladen zu werden.

7. Zugangsanordnung nach Anspruch 6,
bei der die eine weitere fahrzeugseitige aufladbare elektrische Energiespeichereinrichtung (SCH) ferner dafür eingerichtet ist, die fahrzeugseitige Authentifizierungseinrichtung (SEE) mit Energie zu versorgen.

8. Zugangsanordnung nach einem der Ansprüche 1 bis 7,
bei der die fahrzeugseitige Energiezufuhreinrichtung (NFF) eine Funkschnittstelle, insbesondere in der Form einer NFC-Schnittstelle, umfasst, um eine mittels Funk drahtlos übertragene Energie (CE) aufzunehmen.

9. Zugangsanordnung nach einem der Ansprüche 1 bis 8,
bei der die fahrzeugseitige Energiezufuhreinrichtung eine Lichtschnittstelle, insbesondere in der Form einer Fotozelle, aufweist, um eine mittels Licht drahtlos übertragene Energie aufzunehmen.

10. Zugangsanordnung nach einem der Ansprüche 1 bis 9,
bei dem die fahrzeugseitige Authentifizierungseinrichtung (SEE) zum Vollziehen der Zugangsberechtigung ein Entriegelungssignal (PS) zum Aktivieren der fahrzeugseitigen Entriegelungseinrichtung ausgibt.

11. Zugangsanordnung nach einem der Ansprüche 1 bis 10,
der ferner einen mobilen Identifikationsgeber (SP) zum Ausgeben der drahtlos zu übertragenen Energie (CE) an die fahrzeugseitige Energiezufuhreinrichtung (NFF, ANF) aufweist.

12. Zugangsanordnung nach Anspruch 11,
bei der der mobile Identifikationsgeber (SP) ferner dafür eingerichtet ist, mit der fahrzeugseitigen Authentifizierungseinrichtung (SEE) eine Authentifizierung durchzuführen.

13. Zugangsanordnung nach Anspruch 11 oder 12,
bei der der mobile Identifikationsgeber als ein Schlüssel, Schlüsselanhänger, ein Mobiltelefon, ein Smartphone (SP) oder ein Fitnesstracker ausgebildet ist.

14. Fahrzeug mit einer Zugangsanordnung nach einem der Ansprüche 1 bis 13.

## Claims

1. Access arrangement (ZAO) for a vehicle (FZ) having the following features:
- a vehicle-side unlocking device (DCS, DL) for actuating a lock mechanism (MO);
- a vehicle-side chargeable electrical energy storage device (SCD) configured to supply the unlocking device (DCS, DL) with energy;
- a vehicle-side charged electrical energy storage device (BUB) configured to charge the vehicle-side chargeable electrical energy storage device (SCD);
- a charging control device (CST, CCI) for controlling the process of charging the vehicle-side chargeable electrical energy storage device (SCD) by the vehicle-side charged electrical energy storage device (BUB),
**characterized by**
a vehicle-side authentication device (SEE) for checking an access authorization and for controlling the charging control device (CST, CCI) depending on the check of the access authorization.

2. Access arrangement according to Claim 1,
wherein the vehicle-side charged electrical energy storage device (BUB) comprises a galvanic cell, in particular in the form of a primary cell.

3. Access arrangement according to Claim 1 or 2,
wherein the vehicle-side chargeable electrical energy storage device comprises a rechargeable battery or a capacitor, in particular in the form of a supercapacitor (SCD).

4. Access arrangement according to any of Claims 1 to 3, wherein the charging control device (CST, CCI) comprises a DC-DC converter in the form of a boost converter (AFW) for converting a first voltage (V1) provided by the vehicle-side charged electrical energy storage device (BUB) into a second voltage (V2) for charging the vehicle-side chargeable electrical energy storage device (SCD), said second voltage being higher than said first voltage.

5. Access arrangement according to any of Claims 1 to 4,
which furthermore comprises a vehicle-side energy supply device (NFF) having the following features:
- a first section (ANF) for taking up wirelessly transmitted energy (CE) and for converting the transmitted energy into electrical energy, and
- a second section (ALN) for supplying the vehicle-side authentication device (SEE) with electrical energy.

6. Access arrangement according to Claim 5,
which furthermore comprises a further vehicle-side chargeable electrical energy storage device (SCH), which is connected to the second section (ALN) of the vehicle-side energy supply device (NFF) in order to be charged.

7. Access arrangement according to Claim 6,
wherein the one further vehicle-side chargeable electrical energy storage device (SCH) is furthermore configured to supply the vehicle-side authentication device (SEE) with energy.

8. Access arrangement according to any of Claims 1 to 7,
wherein the vehicle-side energy supply device (NFF) comprises a radio interface, in particular in the form of an NFC interface, in order to take up an energy (CE) transmitted wirelessly by means of radio.

9. Access arrangement according to any of Claims 1 to 8,
wherein the vehicle-side energy supply device comprises a light interface, in particular in the form of a photocell, in order to take up an energy transmitted wirelessly by means of light.

10. Access arrangement according to any of Claims 1 to 9,
wherein the vehicle-side authentication device (SEE), for executing the access authorization, outputs an unlocking signal (PS) for activating the vehicle-side unlocking device.

11. Access arrangement according to any of Claims 1 to 10,
which furthermore comprises a mobile identification transmitter (SP) for outputting the energy (CE) to be transmitted wirelessly to the vehicle-side energy supply device (NFF, ANF).

12. Access arrangement according to Claim 11,
wherein the mobile identification transmitter (SP) is furthermore configured to carry out an authentication with the vehicle-side authentication device (SEE).

13. Access arrangement according to Claim 11 or 12,
wherein the mobile identification transmitter is embodied as a key, a key fob, a mobile telephone, a smartphone (SP) or a fitness tracker.

14. Vehicle comprising an access arrangement according to any of Claims 1 to 13.

## Revendications

1. Dispositif d'accès (ZAO) destiné à un véhicule {FZ) et comportant les éléments caractéristiques suivants :
- un moyen de déverrouillage côté véhicule (DCS, DL) destiné à actionner un mécanisme de blocage (MO) ;
- un moyen accumulateur d'énergie électrique rechargeable côté véhicule (SCD) qui est conçu pour alimenter en énergie le moyen de déverrouillage (DCS, DL) ;
- un moyen accumulateur d'énergie électrique chargé côté véhicule (BUB) qui est conçu pour charger le moyen accumulateur d'énergie électrique rechargeable côté véhicule (SCD) ;
- un moyen de commande de charge (CST, CCI) destiné à commander le processus de charge du moyen accumulateur d'énergie électrique rechargeable côté véhicule (SCD) par le moyen accumulateur d'énergie électrique chargé côté véhicule (BUB), **caractérisé par**
un moyen d'authentification côté véhicule (SEE) destiné à vérifier une autorisation d'accès et à commander le moyen de commande de charge (CST, CCI) en fonction de la vérification de l'autorisation d'accès.

2. Dispositif d'accès selon la revendication 1, dans lequel le moyen accumulateur d'énergie électrique chargé côté véhicule (BUB) comporte une cellule galvanique, se présentant en particulier sous la forme d'une cellule primaire.

3. Dispositif d'accès selon la revendication 1 ou 2, dans lequel le moyen accumulateur d'énergie électrique rechargeable côté véhicule comprend une batterie rechargeable ou un condensateur, se présentant notamment sous la forme d'un supercondensateur (SCD).

4. Dispositif d'accès selon l'une des revendications 1 à 3, dans lequel le moyen de commande de charge (CST, CCI) comporte un convertisseur de tension continue se présentant sous la forme d'un convertisseur élévateur (AFW) pour convertir une première tension (V1), fournie par le moyen accumulateur d'énergie électrique côté véhicule chargé (BUB), en une deuxième tension (V2), supérieure à celle-ci, destinée à charger le moyen accumulateur d'énergie électrique rechargeable côté véhicule (SCD).

5. Dispositif d'accès selon l'une des revendications 1 à 4, comprenant en outre un moyen d'alimentation en énergie côté véhicule (NFF) présentant les éléments caractéristiques suivants :
- une première portion (ANF) destinée à recevoir l'énergie (CE) transmise sans fil et à convertir l'énergie transmise en énergie électrique, et
- une deuxième portion (ALN) destinée à alimenter le moyen d'authentification côté véhicule (SEE) en énergie électrique.

6. Dispositif d'accès selon la revendication 5, comprenant en outre un autre moyen accumulateur d'énergie électrique rechargeable côté véhicule (SCH) qui est relié à la deuxième portion (ALN) du moyen d'alimentation en énergie côté véhicule (NFF) afin d'être chargé.

7. Dispositif d'accès selon la revendication 6, dans lequel l'autre moyen accumulateur d'énergie électrique rechargeable côté véhicule (SCH) est également conçu pour alimenter le moyen d'authentification côté véhicule (SEE).

8. Dispositif d'accès selon l'une des revendications 1 à 7, dans lequel le moyen d'alimentation en énergie côté véhicule (NFF) comprend une interface radio, se présentant notamment sous la forme d'une interface NFC, afin de recevoir l'énergie (CE) transmise sans fil par radio.

9. Dispositif d'accès selon l'une des revendications 1 à 8, dans lequel le moyen d'alimentation en énergie côté véhicule comporte une interface lumineuse, se présentant notamment sous la forme d'une cellule photoélectrique, afin de recevoir l'énergie transmise sans fil au moyen de la lumière.

10. Dispositif d'accès selon l'une des revendications 1 à 9, dans lequel le moyen d'authentification côté véhicule (SEE) destiné à effectuer l'autorisation d'accès émet un signal de déverrouillage (PS) pour activer le moyen de déverrouillage côté véhicule.

11. Dispositif d'accès selon l'une des revendications 1 à 10, lequel comporte également un émetteur d'identification mobile (SP) destiné à délivrer l'énergie (CE), transmise sans fil, au moyen d'alimentation en énergie côté véhicule (NFF, ANF).

12. Dispositif d'accès selon la revendication 11, dans lequel l'émetteur d'identification mobile (SP) est également conçu pour effectuer une authentification avec le moyen d'authentification côté véhicule (SEE).

13. Dispositif d'accès selon la revendication 11 ou 12, dans lequel l'émetteur d'identification mobile est conçu comme une clé, un porte-clés, un téléphone portable, un smartphone (SP) ou un traqueur d'activité sportive.

14. Véhicule comprenant un dispositif d'accès selon l'une des revendications 1 à 13.
